# EUROPEAN PATENT SPECIFICATION

(11) **EP 1 068 472 B1**
(45) Date of publication and mention of the grant of the patent: **24.05.2006**
(21) Application number: 99916145.8
(22) Date of filing: 19.03.1999
(51) Int. Cl.: F21V 21/26, F16M 11/04

(54) **SUPPORT ARM FOR SURGICAL LIGHT APPARATUS**
TRAGARM FÜR OPERATIONSLEUCHTE
BRAS DE SUPPORT POUR APPAREIL D'ECLAIRAGE CHIRURGICAL

(30) Priority: 27.03.1998 US 79667 P; 30.03.1998 US 50530
(43) Date of publication of application: 17.01.2001
(73) Proprietor: Hill-Rom Services, Inc., Batesville, IN 47006 (US)
(72) Inventor: YEANEY, Gerald, L., Raleigh, NC 27603 (US); BULKO, John, M., Apex, NC 27502 (US); MARTYNA, Frank, L., Oil City, PA 16301 (US); PETERSON, Thomas, M., Erie, PA 16506 (US); TAFT, Michael, A., Raleigh, NC 27610 (US)
(74) Representative: Findlay, Alice Rosemary
(86) International application number: PCT/US1999/006003
(87) International publication number: WO 1999/050598

(56) References cited:
- DE-A- 3 714 637
- DE-U- 8 309 857
- US-A- 2 941 776
- US-A- 4 082 244
- US-A- 4 107 769
- US-A- 4 846 434

## Description

### Background and Summary of the Invention

The present invention relates to a surgical light apparatus, and particularly, to a support arm for the surgical light apparatus. More particularly, the present invention relates to a jointed support arm that permits movement of a lighthead of the surgical light apparatus to various positions and that counterbalances the weight of the surgical lighthead.

Surgical lights used in hospital operating rooms to illuminate surgical sites on patients are known. Many surgical lights include a surgical lighthead containing a light source and an arm mechanism configured to support the surgical lighthead relative to a ceiling of the operating room. Such arm mechanisms typically include one or more joints which allow the surgical lighthead to be moved in plural degrees of freedom within the operating room to various positions so that the light source of the surgical light illuminates a surgical site on a patient in a desired manner. It is desirable for the arm mechanism of the surgical light to counterbalance the associated surgical lighthead when the surgical lighthead is at any position within a range of positions.

DE-U-8309857 discloses a generic support for a surgical lighthead with a first generally vertical arm having a second arm pivotally connected to its lower end. The lighthead is carried by the second arm between first and second positions approximately 20° above and below the horizontal.

US 2941776 discloses a counterbalancing mechanism for supporting an object at a number of different levels. One link of a parallel motion linkage constitutes a housing for the mechanism and the other link is enclosed by a compression spring mounted in the housing such that it maintains the enclosed link under tension.

According to the present invention, an arm assembly for supporting a surgical lighthead of a surgical light apparatus includes a first arm and a first clevis appended to the first arm. The first clevis has a pair of separated first flanges. The first clevis further includes a first stop surface and a second stop surface. The arm assembly includes a second arm which is formed to include an interior region. The surgical lighthead is supported by the second arm. A second clevis is appended to the second arm and has a pair of separated second flanges. The second clevis further includes a third stop surface and a fourth stop surface.

A pair of pivot pins pivotably couples each of the pair of second flanges to a respective one of the first flanges so that the second arm and second clevis are pivotable about a main pivot axis relative to the first arm and first clevis. The pivot pins are spaced apart to define a gap therebetween. A rod extends within the interior region of the second arm. The arm assembly includes a link coupled to the rod and pivotably coupled to the first clevis for pivoting movement about a link pivot axis that is spaced apart from the main pivot axis. A spring extends within the interior region of the second arm and exerts a force on the rod and the link to counterbalance the surgical lighthead.

The arm assembly is configured so that the second arm and second clevis are pivotable about the main pivot axis relative to the first arm and first clevis between a first position in which the third stop surface engages the first stop surface to limit pivoting movement of the second clevis and second arm in a first direction and a second position in which the fourth stop surface engages the second stop surface to limit pivoting movement of the second clevis and second arm in a second direction. The link moves into the gap between the pair of pivot pins during movement of the second arm and second clevis between the first position and the second position.

In preferred embodiments, the arm assembly includes an adjuster mounted on the rod. The adjuster includes a spring-engaging portion that engages the spring to compress the spring against the second clevis. The adjuster is movable to change the force exerted by the spring on the rod and the link to counterbalance the surgical lighthead. Also in preferred embodiments, the arm assembly includes a space filler that is positioned to lie between the first flanges of the first clevis. The space filler includes a rim that spans the space between the first flanges. In addition, the rim of the space filler cooperates with the first flanges to span the space between the second flanges of the second clevis.

Additional features and advantages of the present invention will become apparent to those skilled in the art upon consideration of the following detailed description of preferred embodiments exemplifying the best mode of carrying out the invention as presently perceived.

### Brief Description of the Drawings

The detailed description particularly refers to the accompanying figures in which:

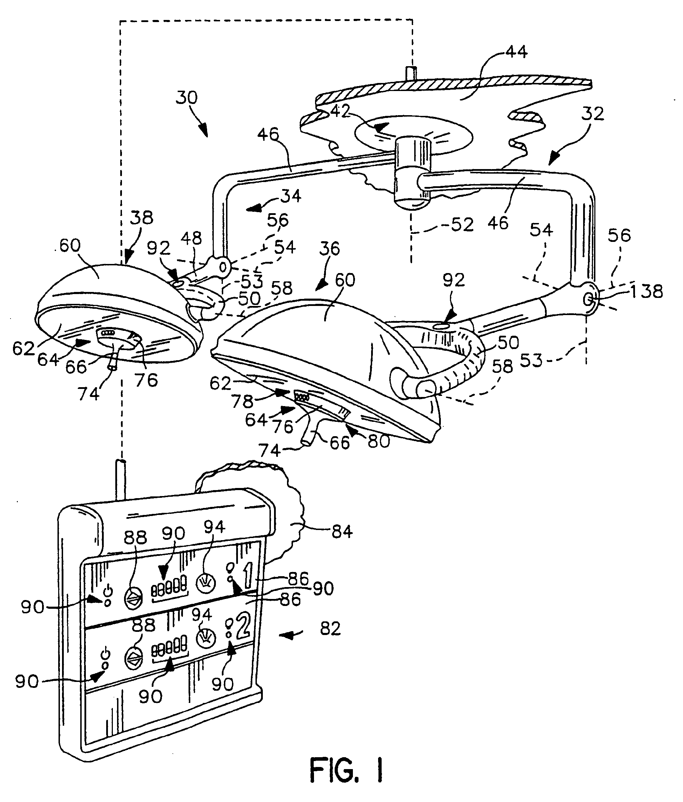

Fig. 1 is an isometric view of a surgical light apparatus in accordance with the present invention showing a first surgical lighthead suspended from a ceiling of a hospital room by a first arm assembly, a second surgical lighthead suspended from the ceiling of the hospital room by a second arm assembly, and a light-controller box mounted to a wall of the hospital room;

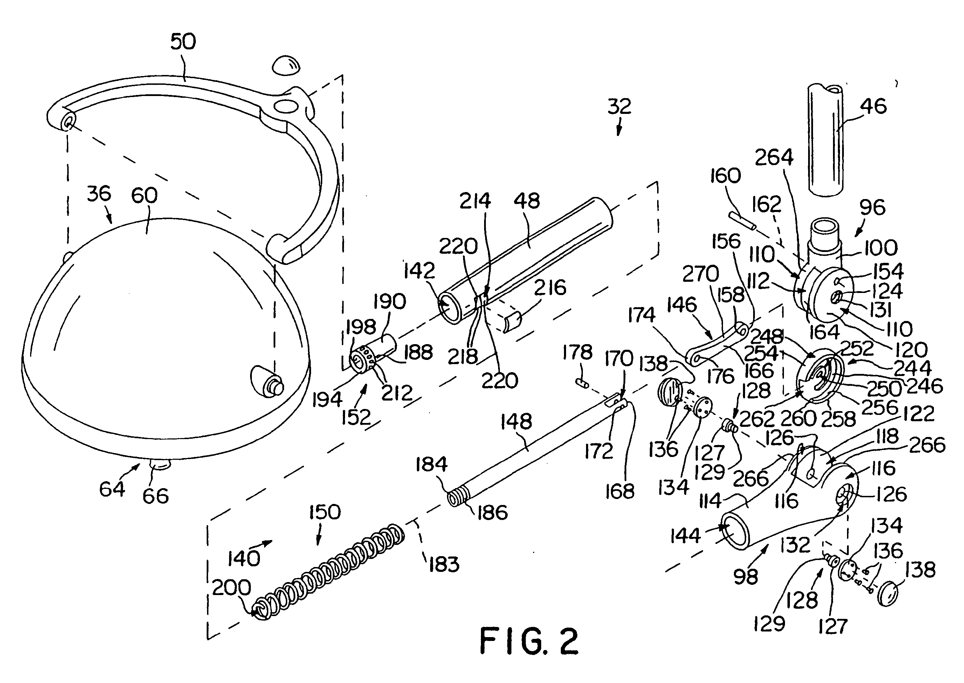

Fig. 2 is an exploded view of the first arm assembly of Fig. 1 showing a vertically extending first arm, a first clevis arranged for attachment to a bottom portion of the first arm, a second clevis arranged for attachment to the first clevis by a pair of pivot pins, a yoke arranged for attachment to the first surgical lighthead, a tubular second arm having a first end that attaches to the yoke and a second end that attaches to the second clevis, and components of a counterbalancing mechanism arranged for insertion into respective interior regions of the second arm and second clevis;

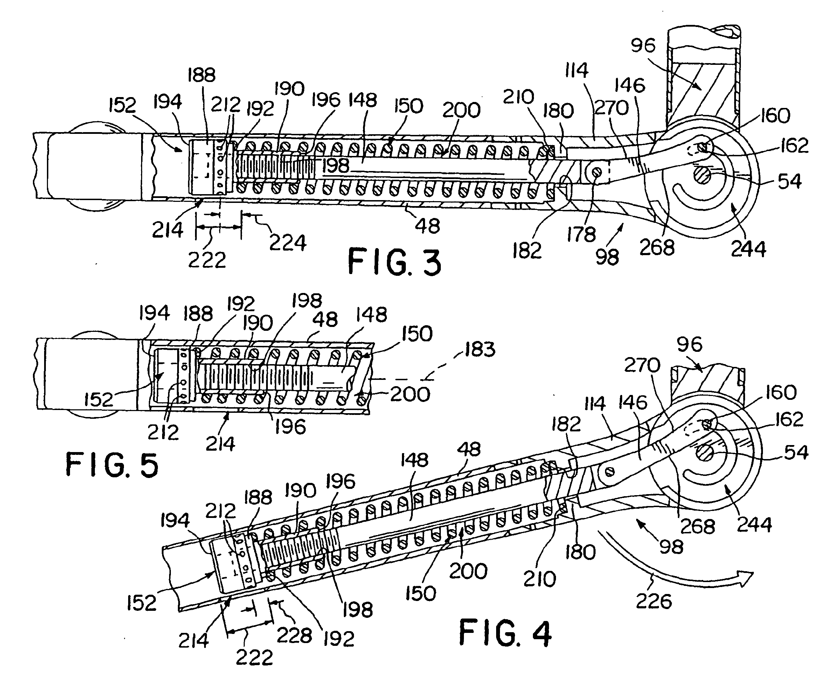

Fig. 3 is a side elevation view of the first arm mechanism of Fig. 2, with portions broken away, showing the counterbalancing mechanism including a coil spring extending within an interior region of the second arm, a rod extending through the coil spring within the interior region of the second arm, a link having one end pivotably coupled to one end of the rod and having another end pivotably coupled to the first clevis, and an adjuster bolt threadedly coupled to another end of the rod, the adjuster bolt including a plurality of small holes that are accessible through a window formed in the second arm;
Fig. 4 is a side elevation view similar to Fig. 3 showing the second arm and second clevis pivoting in the direction of the double arrow relative to the first clevis, the rod moving relative to the second arm as the second arm and second clevis pivot in the direction of the double arrow so that the spring is further compressed between the adjuster bolt and a shoulder of the second clevis;

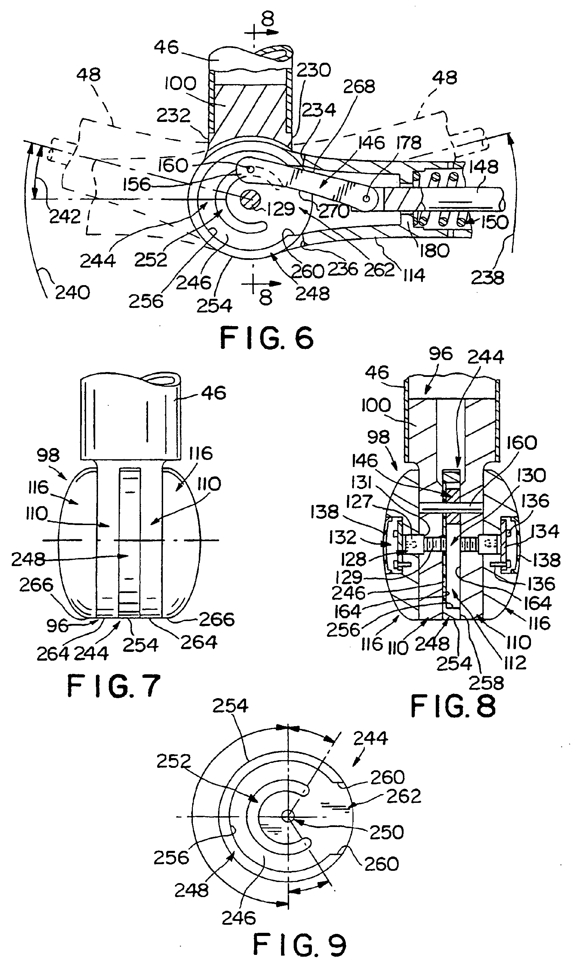

Fig. 5 is a side elevation view of a portion of the second arm in a horizontal position showing the adjuster bolt adjusted relative to the rod such that the small holes of the adjuster bolt are inaccessible through the window in the arm and such that the small holes would become accessible through the window in the second arm if the second arm were pivoted downwardly away from the horizontal position by a sufficient amount;
Fig. 6 is a side elevation view of a portion of the first arm mechanism showing the second arm and second clevis in a horizontal position (in solid), the second arm and second clevis being pivotable from the solid-line horizontal position in a counterclockwise direction to a first position (in phantom) in which a stop edge of the second clevis engages an associated stop edge of the first clevis, and the second arm and second clevis being pivotable from the solid-line horizontal position in a clockwise direction through another horizontal position (in phantom) into a second position (in phantom) in which another stop edge of the second clevis engages an associated stop edge of the first clevis;
Fig. 7 is a rear view of the arm mechanism of Fig. 6 showing a pair of flanges of the first clevis positioned to lie between a pair of flanges of the second clevis and showing a space filler positioned to lie between the pair of flanges of the first clevis;
Fig. 8 is a sectional view of the arm mechanism of Fig. 6, taken along line 8-8, showing the link of the counterbalancing assembly pinned to the flanges of the first clevis above the pair of pivot pins coupling the second clevis to the first clevis;
Fig. 9 is a side elevation view of the space filler showing an arcuate slot and a central aperture formed in a thin wall of the space filler and showing an arcuate rim of the space filler appended to an outer periphery of the thin wall;

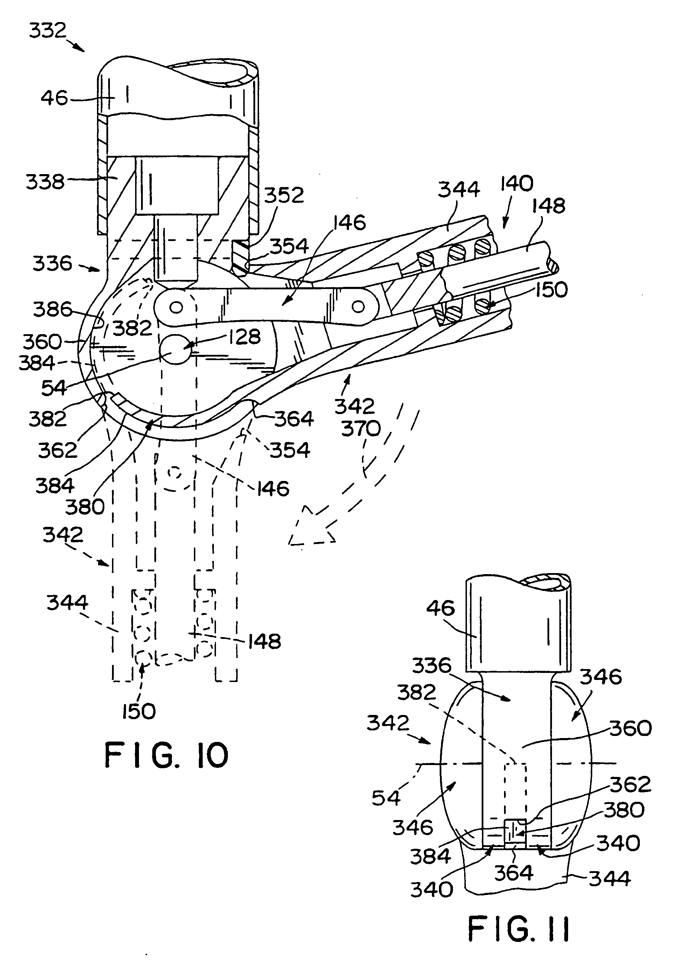

Fig. 10 is side elevation view of a portion of an alternative embodiment arm mechanism in accordance with the present invention, with portions broken away, showing a second clevis of the alternative embodiment arm mechanism in a raised or first position (in solid) in which a stop edge of the second clevis engages an associated stop member of a first clevis of the alternative embodiment arm mechanism, and the second clevis being pivotable from the raised position in a clockwise direction (indicated by the phantom double arrow) into a lowered or second position (in phantom) in which another stop edge of the second clevis engages an associated stop edge of the first clevis; and
Fig. 11 is a rear view of a portion of the alternative embodiment arm mechanism of Fig. 10 showing the second clevis in an intermediate position between the raised and lowered positions.

### Detailed Description of the Drawings

A surgical light apparatus 30 includes a first arm assembly 32, a second arm assembly 34, a first lighthead 36 coupled to first arm assembly 32, and a second lighthead 38 coupled to second arm assembly 34 as shown in Fig. 1. First and second arm assemblies 32, 34 each couple to a common mounting apparatus 42 which is configured to mount to suitable support structure (not shown) associated with a ceiling 44. Each arm assembly 32, 34 includes an L-shaped upper or first arm 46, a lower or second arm 48, and a yoke 50. Each first arm 46 is independently pivotable relative to mounting apparatus 42 about a vertical pivot axis 52. Each second arm 48 is pivotable relative to the respective first arm 46 about a respective horizontal or main pivot axis 54 and about a respective vertical pivot axis 53 that is spaced from pivot axis 52. In addition, each yoke 50 is pivotable relative to the respective second arm 48 about a respective pivot axis 56 and each of lightheads 36, 38 is pivotable relative to the respective yoke 50 about a respective pivot axis 58. Thus, arm assemblies 32, 34 and lightheads 36, 38 are movable to a variety of positions relative to ceiling 44.

Each lighthead 36, 38 includes a dome-shaped housing 60, a lens 62 through which light shines from the respective lighthead 36, 38, and a handle assembly 64 as shown in Fig. 1. Each handle assembly 64 includes a handle 66 which is grasped by a surgeon to move the respective lighthead 36, 38 and associated arm assembly 32, 34 to a desired position. Each lighthead 36, 38 includes one or more light bulbs (not shown) and each lighthead 36, 38 includes a reflector (not shown) that reflects light emanating from the at least one light bulb to illuminate a surgical site on a patient. Each lighthead 36, 38 also includes a light absorption filter (not shown) that is fabricated from specially formulated glass to filter most of the near and intermediate infra-red emissions from the at least one light bulb.

Handle 66 of each handle assembly 64 is rotatable to move the at least one light bulb relative to the reflector to adjust the pattern size of reflected light that illuminates the surgical site. The pattern size may be thought of generally as the diameter of the area illuminated by the associated lighthead 36, 38. In addition, handle assembly 64 includes a button 74 at the bottom of handle 66 which is pressed to adjust the intensity level at which light emanates from the at least one light bulb. Handle assembly 64 includes an escutcheon 76 above handle 66. Handle assembly 64 further includes a first set of LED's 78 and a second set of LED's 80 that are visible on respective sides of escutcheon 76 to provide user information regarding the operation of the at least one light bulb and the intensity level at which light is emanating from the at least one light bulb. In preferred embodiments, each of the at least one light bulb is a tungsten halogen lamp.

Surgical light apparatus 30 includes a controller box 82, shown in Fig. 1, which is mounted to a wall 84 or other suitable structure and which is coupled electrically to surgical lightheads 36, 38 to control the operation of the at least one light bulb. Controller box 82 includes a control panel 86 having buttons 88 and sets of LED's 90 that are associated with each respective lighthead 36, 38. Each set of LED's 90 is arranged similarly and provides the same information as LED's 78, 80 of the respective lighthead 36, 38. In addition, each button 86 is pressed to change the light intensity of the at least one light bulb in the same manner that button 74 of the associated lighthead 36, 38 is pressed to change the light intensity of the at least one light bulb. Thus, the operation of the at least one light bulb is controllable either with the respective handle assembly 64 or controller box 82. Surgical light apparatus 30 optionally may include a task light 92, shown in Fig. 1, and controller box 82 optionally may include a button 94 that is pressed to turn task light 92 on and off.

Other features of surgical light apparatus 30 are discussed and shown in detail in co-pending U.S. patent applications Serial No. 09/050,265 entitled Reflector for Surgical Light Apparatus; Serial No. 09/050,529 entitled Surgical Light Apparatus with Improved Cooling; Serial No. 09/050,534 Controls for Surgical Light Apparatus; and Serial No. 09/050, 576 entitled Task Light for Surgical Light Apparatus, all of which are hereby incorporated by reference.

The description below of first arm assembly 32 and the operation of first arm assembly 32 applies as well to second arm assembly 34 and the operation of second arm assembly 34 unless specifically noted otherwise. In addition, although surgical light apparatus 30 includes two arm assemblies 32, 34 and two lightheads 36, 38 as shown in Fig. 1, it is within the scope of the invention as presently perceived for a different number of arm assemblies and corresponding lightheads to be provided. For example, a surgical light apparatus having only one arm assembly and one corresponding lighthead and a surgical light apparatus having three or more arm assemblies and three or more corresponding lightheads are possible.

Arm assembly 32 includes first arm 46 and second arm 48 as previously described. Arm assembly 32 further includes a first clevis 96 that attaches or otherwise appends to first arm 46 and a second clevis 98 that attaches or otherwise appends to second arm 48 as shown, for example, in Figs. 2 and 3. First clevis 96 includes a main body 100 and a pair of flanges 110 appended to main body 100 and extending therefrom in parallel relation so as to define a space 112 therebetween as shown in Fig. 2. Second clevis 98 includes a main body 114 and a pair of flanges 116 appended to main body 114 and extending therefrom in parallel relation so as to define a space 118 therebetween. Space 118 is larger than space 112.

Flanges 110 of first clevis 96 are received in space 118 of second clevis 98 and flanges 110 each include an outer side face 120 that confronts a respective inner side face 122 of flanges 116 such that a minimal amount of clearance exists between side faces 120, 122. Flanges 110 each include a main aperture 124 and flanges 116 each include a main aperture 126 as shown in Fig. 2. A pair of pivot pins 128 is received by apertures 124, 126 to pivotably couple flanges 116 of second clevis 98 to respective flanges 110 of first clevis 96. Pivot pins 128 are spaced apart from one another such that a portion of space 112 defines a gap 130 between pivot pins 128 as shown best in Fig. 8.

In preferred embodiments, apertures 124 formed in flanges 110 of clevis 96 are threaded and apertures 126 formed in flanges 116 of clevis 98 are smooth. In addition, each pivot pin 128 includes an enlarged head portion 127 received in a respective aperture 126 and a threaded portion 129 received in a respective aperture 124. Apertures 124 are smaller in diameter than apertures 126 so that when pivot pins are threaded into apertures 124, head portions 127 engage a shoulder surface 131 of the respective flange 110. As second clevis 98 and second arm 48 pivot about main pivot axis 54, pivot pins 128 remain stationary along with flanges 110 of first clevis 96 while flanges 116 of second clevis 98 rotate relative to enlarged head portions 127 of pivot pins 128. Pivot pins 128, therefore, cooperate with apertures 126 to define main pivot axis 54 about which second clevis 98 and second arm 48 rotate. Each flange 116 is formed to include a recess 132, shown in Fig. 2, and arm assembly 32 includes a pair of cover plates 134 that are received in respective recesses 132 and that are fastened to the respective flange 116 by suitable fasteners, such as screws 136. Arm assembly 32 further includes a pair of cosmetic caps 138, shown in Figs. 1, 2 and 8, that are received in respective recesses 132 to shield respective cover plates 134 and screws 136 from view.

Second arm 48 is a tubular member having an interior region 142 and second clevis 98 is formed to include an interior region 144 that extends through main body 114 into communication with space 118. Second arm 48 attaches to second clevis 98 such that interior region 142 communicates with interior region 144. Arm assembly 32 includes a counterbalancing assembly 140 that operates to counterbalance lighthead 32 so that lighthead 32 remains stationary after placement in a desired position. Respective portions of counterbalancing assembly 140 are positioned to lie in interior regions 142, 144 so as to be shielded from view by second arm 48 and second clevis 98.

Counterbalancing assembly 140 includes a link 146, a rod 148, a spring 150, and an adjuster 152 as shown best in Fig. 2. Flanges 110 of first clevis 96 are each formed to include an aperture 154 that is spaced apart from and vertically above the respective main aperture 124. Link 146 includes a first end 156 formed with an aperture 158. Counterbalancing assembly 140 further includes a pivot pin 160 that is received by apertures 154 of flanges 110 and aperture 158 formed in first end 156 of link 146. Thus, pivot pin 160 couples link 146 to first clevis 96 for pivoting movement about a link pivot axis 162 defined by pivot pin 160. Each flange 110 of first clevis 96 includes an inner face 164 and link 146 includes a pair of vertical faces 166. First end 156 of link 146 is positioned to lie between inner faces 164 of flanges 110 such that a portion of each vertical face 166 faces toward a respective inner face 164 of the associated flange 110.

Link 146 extends out of space 112 and away from first clevis 96 into interior region 144 of main body 114 of second clevis 98 as shown, for example, in Figs. 3 and 4. Rod 148 includes a first end face 168 formed with a slot 170 therein as shown in Fig. 2. Rod 148 is formed to include a pair of apertures 172 adjacent to first end face 168. Each aperture 172 communicates with slot 170. Link 146 includes a second end 174 formed with an aperture 176. Second end 174 of link 146 is positioned to lie in slot 170 formed in rod 148 and counterbalancing assembly 140 includes a pivot pin 178 received in apertures 172 or rod 148 and aperture 176 of link 146 to pivotably couple link 146 to rod 148.

Rod 148 extends from link 146 through interior region 144 of main body 114 of second clevis 98 into interior region 142 of second arm 48 as shown in Figs. 3 and 4. Thus, one portion of rod 148 extends within interior region 144 of second clevis 98 and another portion of rod 148 extends within interior region 142 of second arm 48. Second clevis 98 includes an annular shoulder 180 having a journal aperture 182 formed therethrough as also shown in Figs. 3 and 4. Journal aperture 182 is sized so that a minimal amount of clearance exists between shoulder 180 and rod 148.

As second arm 48 and second clevis 98 pivot about main axis 54, link 146 pivots about link pivot axis 162 relative to first clevis 96 and pivots about pivot pin 178 relative to rod 148. Pivoting movement of link 146 causes rod 148 to move within journal aperture 182 relative to shoulder 180. Annular shoulder 180 is configured so that rod 148 is supported relative to second arm 48 in substantially coaxial relation therewith and so that a longitudinal axis 183 of rod 148 extends through main pivot axis 54 in perpendicular relation therewith. In alternative embodiments, a separate bushing (not shown) may be mounted in journal aperture 182 of shoulder 180 to support rod 148 and to guide movement of rod 148 relative to shoulder 180.

Rod 148 includes a second end face 184 that faces away from second clevis 98 as shown in Fig. 2. In addition, rod 148 is formed with a thread or threads 186 adjacent to second end face 184. Adjuster 152 includes a spring-engaging portion 188 and a rod-engaging portion 190 appended to spring-engaging portion 188 and extending axially therefrom toward first and second clevises 96, 98. Spring-engaging portion 188 of adjuster 152 includes a spring-engaging surface 192, shown in Figs. 3-5, that faces toward first and second clevises 96, 98 and an end surface 194, shown in Figs. 2-5, that faces away from first and second clevises 96, 98. In addition, rod-engaging portion 190 includes an end surface 196 that faces toward first and second clevis 96, 98 as shown in Figs. 3-5. Adjuster 152 includes a threaded bore 198 extending therethrough between end surfaces 194, 196. Adjuster 152 is threadedly coupled to rod 148 so that threads 186 of rod 148 engage threaded bore 198 of adjuster 152.

In preferred embodiments, spring 150 is a coil spring defining an interior region 200 and rod 148 extends through interior region 200 of spring 150. In addition, rod-engaging portion 190 of adjuster 152 is received in interior region 200 of spring 150 as shown in Figs. 3-5. Shoulder 180 includes a spring-engaging surface 210 as shown in Figs. 3 and 4. Spring 150 is compressed between spring-engaging surface 192 of adjuster 152 and spring-engaging surface 210 of shoulder 180. Thus, spring 150 acts between shoulder 180 and adjuster 152 to exert a force on rod 148 and link 146 to counterbalance lighthead 36. In addition, adjuster 152 is rotatable relative to rod 148 to change the amount by which spring 152 is compressed between spring-engaging surfaces 192, 210 thereby to change the amount of force exerted by spring 150 on rod 148 and link 146. In alternative embodiments, arm mechanism 32 may include a tubular liner (not shown) that extends between shoulder 180 and adjuster 152 and that surrounds spring 150 to take up some of the circumferential clearance between spring 150 and second arm 48 to facilitate the coaxial positioning of spring 150 relative to second arm 48.

Each of spring-engaging portion 188 and rod-engaging portion 190 of adjuster 152 are somewhat cylindrical in shape and adjuster 152 is configured such that a minimal amount of clearance exists between spring-engaging portion 188 and second arm 48. Spring-engaging portion 188 of adjuster 152 is formed to include a plurality of radially extending holes 212 and second arm 48 is formed to include a window 214, shown, for example, in Fig. 2, which allows access to adjuster 152. Arm assembly 32 includes a cover plate 216 that attaches to second arm 48 to cover window 214. When cover plate 216 is detached from second arm 48, an adjustment tool (not shown), such as a straight rod, is inserted though window 214 and into one of holes 212. The adjustment tool is then moved within window 214 to apply a torque to adjuster 152 to rotate adjuster 152 relative to rod 148. Whether adjuster 152 advances on threads 186 of rod 148 toward first and second clevis 96, 98 or away from first and second clevises 96, 98 is dependent upon the direction that the adjustment tool is moved within window 214.

In preferred embodiments, window 214 is bounded by a pair of spaced apart, axially extending edges 218 and a pair of spaced apart, circumferentially extending edges 220 as shown best in Fig. 2. The spacing between edges 218 limits the amount by which adjuster 152 may be rotated relative to rod 148 during any one stroke of the adjustment tool between edges 218. In addition, the spacing between edges 220, which is indicated by reference numeral 222 in Figs. 3 and 4, limits the amount by which adjuster 152 is movable toward and away from first and second clevises 96, 98.

It will be understood that, although edges 220 are spaced apart by distance 222, adjuster 152 is movable relative to rod 148 between first and second axial positions (not shown) that are spaced apart by an amount that exceeds distance 222. This is due to the fact that, as second clevis 98 and second arm 48 pivot about main pivot axis 54, rod 148 and adjuster 152 are moved relative to second arm 148 by link 146 such that the distance between holes 212 and each of edges 220 varies. For example, an arbitrary position of adjuster 152 relative to rod 148 is shown in Figs. 3 and 4 When second arm 48 is in a horizontal orientation, as shown in Fig. 3, holes 212 are spaced apart from the edge 220 closest to first and second clevises 96, 98 by a distance 224. As second clevis 98 and second arm 48 rotate about main pivot axis 54 in the direction of double arrow 226, shown in Fig. 4, rod 148 is pulled by link 146 through journal aperture 182 such that spring 150 is further compressed between spring-engaging surfaces 192, 210 and such that the distance between holes 212 and the edge 220 closest to first and second clevises 96, 98 decreases. Thus, when second clevis 98 and second arm 48 are in the position shown in Fig. 4, holes 212 are spaced from the edge 220 closest to first and second clevises 96, 98 by a distance 228 which is smaller than distance 224.

When second clevis 98 and second arm 48 are held in the position shown in Fig. 4, the adjustment tool may be used to rotate adjuster 152 relative to rod 148 such that holes 212 move away from the edge 220 closest to first and second clevises 96, 98 and toward the edge 220 furthest from first and second clevises 96, 98. After adjuster 152 is adjusted relative to rod 148 in this manner and after second clevis 98 and second arm 48 are moved upwardly, for example, to a horizontal position, as shown in Fig. 5, holes 212 are no longer accessible through window 214. Of course, holes 212 become accessible through window 214 when second arm 48 is pivoted downwardly from the horizontal position of Fig. 5 back to the position of Fig. 4.

It will be understood that adjuster 152 may be moved to a position on rod 148 such that holes 212 are accessible through window 214 when second arm 48 is in the horizontal position, shown in Fig. 3, and such that holes 212 are inaccessible through window 214 when second arm 48 is moved downwardly, for example, to the position shown in Fig. 4. Thus, by articulating second arm 48 and second clevis 98 relative to first arm 46 and first clevis 96 and by using the adjustment tool to make appropriate adjustments of adjuster 152 relative to rod 148 when holes 212 are accessible through window 212, adjuster 152 is movable axially on rod 148 by an amount that exceeds distance 222.

Movement of adjuster 152 relative to rod 148 alters the amount by which spring 150 is compressed between spring-engaging surface 192 of adjuster 152 and spring-engaging surface 210 of shoulder 180. In use, adjuster 152 is moved to a position relative to rod 148 such that surgical lighthead 36, yoke 50, second arm 48, second clevis 98, counterbalancing assembly 140, and other associated components of surgical light apparatus 30 are counterbalanced to remain stationary when placed in any desired position within a range of positions. Counterbalancing assembly 140 is configured so that second end face 184 of rod 148 is positioned to lie inside threaded bore 198 of adjuster 152 between end surfaces 194, 196.

By configuring adjuster 152 such that second end face 184 of rod 148 is never in a position between end face 194 of adjuster 152 and yoke 50, second arm 48 has a length that allows yoke 50 and lighthead 34 to be closer to main pivot axis 54 than would otherwise be possible if rod 148 were able to extend from adjuster 152 such that second end face 184 of rod 148 were positioned to lie between adjuster 152 and yoke 50. Having yoke 50 and lighthead 36 closer to main pivot axis 54 reduces the moment created by yoke 50 and lighthead 36 about main pivot axis 54 which means that counterbalancing assembly 140 is able to counterbalance yoke 50 and lighthead 36 with a smaller, and therefore less expensive, spring than would be the case if yoke 54 and lighthead 36 were further from main pivot axis 54.

In preferred embodiments, spring 150 is made of chrome silicon ASTM A401 material and has a spring rate of approximately three-hundred-fifty pounds per inch (18100 mm Hg). In addition, the ends of spring 150 are ground so as to abut respective spring-engaging surfaces 192, 210 flushly. In preferred embodiments, link 146 and adjuster 152 are both made of 4140 steel material, rod 148 is made of 4130 steel material, and inner and outer clevises 96, 98 are each cast from aluminum. Of course, it is within the scope of the invention as presently perceived for these elements to be fabricated from other materials of suitable strength.

Arm mechanism 32 is configured such that, in one preferred embodiment, second clevis 98 and second arm 48 are pivotable about main pivot axis 54 between first and second positions through a range of motion that exceeds one-hundred-eighty degrees. Main body 100 of first clevis 96 is formed to include a first stop surface 230 and a second stop surface 232 as shown in Fig. 6. In addition, main body 114 of second clevis 98 is formed to include a third stop surface 234 and a fourth stop surface 236 as also shown in Fig. 6. When second clevis 98 and second arm 48 are in the first position, third stop surface 234 engages first stop surface 230 and when second clevis 98 and second arm 48 are in the second position, fourth stop surface 236 engages second stop surface 232.

Engagement between stop surfaces 230, 234 prevents clevis 98 and second arm 48 from pivoting upwardly past the first position in the direction of arrow 238 and engagement between stop surfaces 232, 236 prevents clevis 98 and second arm 48 from pivoting upwardly past the second position in the direction of arrow 240. When second clevis 98 and second arm 48 are in the first position, second arm 48 extends at an angle of approximately fifteen degrees above horizontal on one side of first clevis 96 and when second clevis 98 and second arm 48 are in the second position, second arm 48 extends at an angle 242 of approximately fifteen degrees above horizontal on another side of first clevis 96 as shown in Fig. 6 Thus, in preferred embodiments, second clevis 98 and second arm 48 are pivotable about main pivot axis 54 relative to first clevis 96 and first arm 46 through a range of motion of approximately two-hundred-ten degrees.

As second clevis 98 and second arm 48 move between the first and second positions, link 146 moves through gap 130 between pivot pins 128. When second clevis 98 and second arm 48 are aligned vertically with first clevis 96 and first arm 46, link 146 is positioned to lie in gap 130 between pivot pins 128. By having pivot pin 160 and the associated link pivot axis 162 vertically above pivot pins 128 and the associated main pivot axis 54, longitudinal axis 183 of rod 148 extends through both pivot axis 160 and pivot axis 54 when second clevis 98 and second arm 48 are in a vertical position aligned with first clevis 96 and first arm 46. In addition, by having pivot pin 160 and the associated link pivot axis 162 vertically above pivot pins 128 and the associated main pivot axis 54, spring 150 of counterbalancing assembly 140 exerts a substantially equivalent amount of force on rod 148 and link 146 when second clevis 98 and second arm 48 are moved from the vertical position by similar amounts either in direction 238 toward the first position or in direction 240 toward the second position.

In preferred embodiments, counterbalancing assembly 140 operates to counterbalance surgical lighthead 36 and other components of surgical light apparatus 30 associated with surgical lighthead 36 when second arm 48 and second clevis 98 are at any position between the first and second positions. In addition, in preferred embodiments, longitudinal axis 183 of rod 148 and axis 58, about which lighthead 36 pivots relative to yoke 50, intersect at the center of gravity (not shown) of surgical lighthead 36. By having axis 183 intersecting with axis 58 at the center of gravity of lighthead 36, the moment created by lighthead 36 and yoke 50 about main pivot axis 54, when second arm 48 and second clevis 98 are stationary in any particular position between the first and second positions, is substantially constant independent of the position of yoke 50 relative to second arm 48 and independent of the position of lighthead 36 relative to yoke 50. If the center of gravity of lighthead 36 is offset from either of axes 58, 183 by a slight amount, friction that is inherently present between moving components of arm assembly 32 assists counterbalancing assembly 140 to compensate for this offset so that lighthead 36 and other components of surgical light apparatus 30 associated with lighthead 36 still remain counterbalanced.

While arm assembly 32 can support any object of interest having a weight within limits dictated by counterbalancing assembly 140, it is anticipated that most users of arm assembly 32 will use arm assembly 32 to support a surgical lighthead. Thus, the meaning of the word "surgical lighthead" or "lighthead" as used in this specification and in the claims should be taken to include any object that is carried by arm assembly 32 either with or without yoke 50.

Arm assembly 32 includes a clevis cover or space filler 244 as shown in Figs. 2 and 7-9. Space filler 244 includes a circular thin wall portion 246 and an arcuate rim 248 appended to the outer periphery of thin wall portion 246. Thin wall portion 246 is formed to include a central aperture 250 and an arcuate slot 252. Rim 248 and slot 252 are substantially concentric with central aperture 250 and slot 252 is positioned to lie between aperture 250 and rim 248 as shown best in Fig. 9. Rim 248 includes an outer circumferential edge 254 and an inner circumferential edge 256. In addition, rim 248 includes an arcuate surface 258 that extends between circumferential edges 254, 256 and that is spaced apart from and parallel with thin wall portion 246. Rim 248 further includes a pair of end edges 260 defining a link-receiving gap 262 therebetween as shown in Figs. 2 and 9.

Space filler 244 is positioned to lie in space 112 between flanges 110 of first clevis 96 so that thin wall portion 246 is adjacent to inner face 164 of one of flanges 110 with a minimal amount of clearance therebetween and so that arcuate surface 258 of rim 248 is adjacent to the inner face 164 of the other of flanges 110 with a minimal amount of clearance therebetween as shown in Fig. 8. In addition, threaded portion 129 of one of pivot pins 128 is received in central aperture 250 of thin wall portion 248 so that space filler 244 is supported for pivoting movement about main pivot axis 54 relative to the flanges 110 of first clevis 96.

Each of flanges 110 of first clevis 96 includes an outer circumferential edge 264 and each of flanges 116 of second clevis 98 includes an outer circumferential edge 266 as shown, for example, in Fig. 7. Circumferential edge 254 of rim 248 and circumferential edges 264, 266 of first and second clevises 96, 98 have substantially equivalent diameters. Thus, edge 254 of space filler 244 substantially spans space 112 between flanges 110 of first clevis 96 and edges 264 of flanges 110 cooperate with edge 254 of space filler 244 to substantially span space 118 between flanges 116 of second clevis 98. By configuring arm assembly 32 such that space 112 is spanned by rim 248 of space filler 244 and such that space 118 is spanned by rim 248 of space filler 244 and flanges 110 of first clevis 96, contamination is blocked from reaching space 112 and space 118.

Pin 160, which pivotably couples link 146 to flanges 110 of first clevis 96 as previously described, extends through arcuate slot 252 formed in thin wall portion 246 of space filler 244. Thin wall portion 246 is positioned to lie between link 146 and inner face 164 of one of flanges 110 as shown in Fig. 8, and rim 248 substantially surrounds first end 156 of link 146 as shown in Fig. 6. Link 146 extends from pin 160 through link-receiving gap 262 of rim 248 and into interior region 144 of main body 114 of second clevis 98. Link 146 includes a flat edge 268 and a curved edge 270, each of which extend between first and second ends 156, 174 of link 146. Edge 270 is curved primarily to provide more room in space 112 between flanges 110 and interior region 144 of second clevis 98 for electrical wires (not shown) that are routed through arm mechanism 32 and yoke 50 to lighthead 36.

As second clevis 98 and second arm 48 pivot in directions 238, 240 between the first and second positions, one of edges 268, 270 engages a respective one of edges 260 of rim 248 to cause space filler 244 to pivot about main pivot axis 54 relative to flanges 110 of first clevis 96. Space filler 244 is configured so that link-receiving space 262 remains aligned with interior region 144 of second clevis 98 during movement of second clevis 98 and second arm 48 between the first and second positions. When the direction of pivoting movement of second clevis 98 and second arm 48 is reversed, link 146 separates away from one of edges 260 of rim 248 and moves toward the other of edges 260 of rim 248 and space filler 244 remains stationary relative to first clevis 96 until link 146 comes into contact with the other of edges 260 at which point space filler 244 pivots with second clevis 98 and second arm 48 relative to first clevis 96. However, because engagement between link 146 and space filler 244 causes space filler 244 to pivot about main pivot axis 54 during pivoting movement of second clevis 98 and second arm 48, space filler 244 pivots about main pivot axis 54 at a different rate than second clevis 98 and second arm 48.

An alternative embodiment arm mechanism 332 which is similar to arm mechanism 32 is shown in Figs. 10 and 11. Many of the components of arm mechanism 332 are substantially similar to corresponding components of arm mechanism 32 and, therefore, are indicated with like reference numerals. For example, arm mechanism 332 includes a counterbalancing assembly 140 having a link 146, a rod 148, and a spring 150. Arm mechanism 332 includes a first clevis 336 having a main body 338 and a pair of flanges 340 extending from main body 338. Main body 338 of first clevis 336 is attached or otherwise appended to first arm 46 as shown in Fig. 10. Arm mechanism 332 includes a second clevis 342 having a main body 344 and a pair of flanges 346 extending therefrom. Second clevis 342 is pivotably coupled to first clevis 336 by a pair of pivot pins 128 in substantially the same manner that second clevis 98 is pivotably coupled to first clevis 96.

The main difference between arm mechanism 32 and arm mechanism 332 is that arm mechanism 32 is configured so that second clevis 98 and second arm 48 are able to pivot through a range of motion that exceeds one-hundred-eighty degrees as previously described, whereas arm mechanism 332 is configured so that second clevis 342 and the associated second arm (not shown) are able to pivot through a range of motion of approximately one-hundred-five degrees, as shown in Fig. 10. First clevis 336 includes a stop member 350 that is attached or otherwise adhered to main body 338 thereof as shown in Fig. 10. Stop member 350 includes a stop surface 352 and second clevis 342 includes a stop surface 354 that engages stop surface 352 when second clevis 342 and the associated second arm are in a raised or first position as also shown in Fig. 10 (in solid).

First clevis 336 includes an amount of bridging material 360 that is appended to a portion of the outer periphery of each of flanges 340 of first clevis 336 as shown in Fig. 10, and that spans the space between flanges 340 of first clevis 336 as shown in Fig. 11. Bridging material 360 includes a stop surface 362 at the lower end thereof as shown in Figs. 10 and 11. Second clevis 342 includes a stop surface 364 that engages stop surface 362 when second clevis 342 and the associated second arm are in a second, substantially vertical or lowered position as shown in Fig. 10 (in phantom). When second clevis 342 is moved from the first position to the second position in the direction of phantom arrow 370, shown in Fig. 10, link 146 moves into a gap defined between pivot pins 128.

Second clevis 342 is formed to include an arcuate filler arm 380 that extends from main body 344 into the space defined between flanges 340 of first clevis 336 as shown best in Fig. 10. Filler arm 380 spans the space between flanges 340 thereby to block contamination from reaching the space between flanges 340 and the interior regions of first and second clevises 336, 342. Filler arm 380 includes a distal end surface 382 that is positioned to lie adjacent to stop surface 362 of bridging material 360 when second clevis 342 and the second arm associated therewith are in the first position as shown in Fig. 10 (in solid). Filler arm 380 includes an arcuate outer surface 384 and bridging material 360 includes an arcuate inner surface 386. Outer surface 384 of filler arm 380 confronts inner surface 386 of bridging material 360 with a minimal amount of clearance therebetween when second clevis 342 and the associated second arm are in the second position as shown in Fig. 10 (in phantom).

## Claims

1. An arm assembly (32, 34, 332) for supporting a surgical lighthead (34, 35) of a surgical light apparatus, the arm assembly comprising a first arm (46), a second arm (48) formed to include an interior region (142), the surgical lighthead (34, 38) being supported by the second arm and a spring (150) for exerting a force to counterbalance the surgical lighthead (34, 38), **characterised in that** the apparatus further comprises pivot means (128) for pivotably coupling the second arm (48) to the first arm (46) so that the second arm (48) is pivotable about a main pivot axis (54) relative to the first arm (46), a first clevis (96, 336) appended to the first arm (46) and having a pair of separated first flanges (110, 340), the first clevis including a first stop surface (230, 352) and a second stop surface (232, 362), a second clevis (98, 342) appended to the second arm (48) and having a pair of separated second flanges (116, 346), the second clevis including a third stop surface (234, 354) and a fourth stop surface (236, 364), the pivot means comprising a pair of pivot pins (128) pivotably coupling each of the pair of second flanges (116) to a respective one of the first flanges (110) so that the second arm (48) and a second clevis (98, 342) are pivotable about the main pivot axis (54) relative to the first arm (46) and first clevis (96, 336), the pivot pins (128) being spaced apart to define a gap (130) therebetween; **in that** the further apparatus includes a rod (148) extending within the interior region (142) of the second arm and a link (146) coupled to the rod (148) and pivotably coupled to the first clevis (96) for pivoting movement about a link pivot axis (162) that is spaced apart from the main pivot axis (54) **in that** the spring (150) extends within the interior region (142) of the second arm and exerts a force on the rod (148) and the link (146) to counterbalance the surgical lighthead (34, 38), and **in that** the second arm (48)) and second clevis (98, 342) are pivotable about the main pivot axis (54) relative to the first arm (46) and first clevis (96, 336) between a first position in which the third stop surface (234, 354) engages the first stop surface (230, 352) to limit pivoting movement of the second clevis (98, 342) and second arm (48) in a first direction and a second position in which the fourth stop surface (236, 364) engages the second stop surface (232, 262) to limit pivoting movement of the second clevis (98, 342) and second arm (48) in a second direction, the link (146) moving into the gap (130) between the pair of pivot pins (128) during movement of the second arm (48) and second clevis (98, 342) between the first position and the second position.

2. The arm assembly of claim 1, wherein the first clevis (96) includes a first main body (100) to which the first flanges (110) are appended, the second clevis (98) includes a second main body (114) to which the second flanges (116) are appended, the first main body (100) provides the first and second stop surfaces (230, 232) and the second main body (114) provides the third and fourth stop surface (234, 236).

3. The arm assembly of claim 2, wherein the first, second, third and fourth stop surfaces (230, 232, 234, 236) are configured so that the second clevis (98) and the second arm (48) pivot through an angle of at least one-hundred-eighty degrees about the main pivot axis (54) relative to the first arm (46) and the first clevis (96) during movement of the second arm (48) and the second clevis (98) between the first and second positions.

4. The arm assembly of claim 3, wherein the link (146) is outside the gap (130) between the pair of pivot pins (128) when the second arm (48) and second clevis (98) are in the first position, the link (146) is outside the gap (130) between the pair of pivot pins (128)when the second arm (48) and second clevis (98) are in the second position, and the link (146) is positioned to lie in the gap (130) when the second arm (48) and second clevis (98) are half way between the first and second positions.

5. The arm assembly of claim 1, wherein the first clevis (336) includes a first main body (338) to which the first flanges (340) are appended, the second clevis (342) includes a second main body (344) to which the second flanges (346) are appended, the first main body (338) provides the first stop surface (352), the second main body (344) provides the third stop surface (354), one of the first flanges (340) is formed to include the second stop surface (362),and one of the second flanges (346) is formed to include the fourth stop surface (364).

6. The arm assembly of claim 5, wherein the first and third stop surfaces (352, 354) are configured so that the second arm (48) and the first arm (46) define an acute included angle therebetween when the second arm (48) and second clevis (342) are in the first position and the second and fourth stop surface (362, 364) are configured so that the second arm (48) and first arm (46) define an angle of about one-hundred-eighty degrees therebetween when the second arm (48) and second clevis (342) are in the second position.

7. The arm assembly of claim 6, wherein the link (146) is outside the gap (130) between the pair of pivot pins (128) when the second arm (48) and second clevis (342) are in the first position and the link (146) is positioned to lie in the gap (130) between the pair of pivot pins (128) when the second arm (48) and second clevis (342) are in the second position.

8. The arm assembly of any preceding claim, wherein the link pivot axis (162) is vertically above the main pivot axis (54).

9. The arm assembly of any preceding claim, wherein the first arm (46), the second arm (48), the link (146) and the rod (148) are vertically aligned with one another when the second arm (48) and second clevis (98, 342) are in the second position.

10. The arm assembly of any preceding claim wherein the rod (148) has spaced apart first and second end surface (168, 184) and the link (146) is pivotably coupled to the rod adjacent to the first end surface (168), and wherein the apparatus further comprises an adjuster (152) threadedly coupled to the rod (148), the adjuster including a rod-engaging portion (190) and a spring-engaging portion (188), the rod-engaging portion having a first end face (196) facing toward the second clevis (98), the spring-engaging portion (188) having a second end face (192) facing away from the second clevis (98), the spring (150) being compressed between the spring-engaging portion (188) and the second clevis (98) so as to exert a force on the rod (148) and the link (146) to counterbalance the surgical lighthead (34, 38), the adjuster (152) being movable relative to the rod (146) between first and second positions to adjust compression of the spring (150), and the second end surface (184) of the rod being positioned to lie between the first and second end face (194, 196) when the adjuster (152) is in any position between the first and second positions.

11. The arm assembly of claim 10, wherein the rod-engaging portion (190) of the adjuster is somewhat cylindrical and the spring-engaging portion (188) extends radially outwardly from the rod-engaging portion (190).

12. The arm assembly of either claim 10 or claim 11, wherein the spring is a coil spring (150) having an interior region (200), the rod (148) extends within the interior region (200) of the coil spring, and the rod-engaging portion (190) of the adjuster is positioned to lie within the interior region (200) of the coil spring.

13. The arm assembly of any one of claims 10 to 12. wherein the rod-engaging portion (190) of the adjuster includes a first cylindrical outer surface having a first diameter and the spring-engaging portion (188) of the adjuster includes a second cylindrical outer surface having a second diameter that is larger than the first diameter.

14. The arm assembly of claim 13, wherein the second outer surface is formed to include a plurality of radially extending holes (212) and the second arm (48) is formed to include a window (214) through which the holes (212) are accessed with an adjustment tool to adjust the position of the adjuster (152) relative to the rod (148) between the first and second positions.

15. The arm assembly of any preceding claim, wherein the pair of first flanges (110, 340) define a first space (112) therebetween, the pair of second flanges (116, 846) define a second space (118) therebetween, at least a portion of the pair of first flanges (110, 340) being positioned to lie in the second space (118) such that each first flange (110, 340) is adjacent to a respective one of the second flanges (116, 346) and wherein the apparatus further comprises a space filler (244, 380) positioned to lie in the first space (112), each first flange (110, 340) having a first edge (264), each second flange (116, 346) having a second edge (266), and the space filler (244, 380) having a third edge (254), the third edge substantially spanning the first space (112) between the first flanges, and the third edge (254) cooperating with the first edge (264) to substantially span the second space (118) between the second flanges.

16. The arm assembly of claim 15, wherein the first, second and third edges (264, 266, 254) are substantially concentric with the main pivot axis and have substantially equivalent diameters.

17. The arm assembly of either claim 15 or claim 16, wherein the space filler (244) includes a rim (248) providing the third edge (254), the space filler includes a thin wall (246) appended to the rim (248), the link (146) includes a first vertical surface facing toward the thin wall, and the link includes a second vertical surface facing away from the thin wall.

18. The arm assembly of claim 17, wherein the thin wall (246) is formed to include an arcuate slot (252) and the assembly further comprises a link pin (160) pivotably coupling the link (146) to at least one of the first flanges (110), the link pin (160) being received in the arcuate slot (252).

19. The arm assembly of either claim 17 or claim 18, wherein the thin wall (246) is formed to include a central aperture (250) and one of the pair of pivot pins (128) is received by the central aperture (250) so that the space filler (244) is supported for pivoting movement about the main pivot axis (54) relative to the first flanges (110).

20. The arm assembly of any one of claims 15 to 19, wherein the third edge (254) is formed to include a link-receiving gap (262) and the link (146) extends through the link-receiving gap.

## Patentansprüche

1. Armbaugruppe (32, 34, 332) zum Tragen einer chirurgischen Leuchte (34, 35) eines chirurgischen Lichtapparats, wobei die Armbaugruppe besteht aus einem ersten Arm (46), einem zweiten Arm (48), die so geformt sind, dass ein innerer Bereich (142) eingeschlossen wird, wobei die chirurgische Leuchte (34, 38) von dem zweiten Arm getragen wird sowie von einer Feder (15) um eine Kraft auszuüben, um die chirurgische Leuchte (34, 38) auszubalancieren, **dadurch gekennzeichnet, dass** der Apparat weiterhin Schwenkvorrichtungen (128) umfasst, um den zweiten Arm (48) mit dem ersten Arm (46) schwenkbar zu verbinden, sodass der zweite Arm (48) um eine Hauptschwenkachse (54) relativ zum ersten Arm (46) schwenkbar ist, einem ersten Gabelkopf (96, 336), der an den ersten Arm (46) angefügt ist und über ein Paar getrennte erste Flansche (110, 340) verfügt, wobei der erste Gabelkopf eine erste Anschlagfläche (230, 352) und eine zweite Anschlagfläche (232, 362) einschließt, einem zweiten Gabelkopf (98, 342), der an den zweiten Arm (48) angefügt ist und ein Paar getrennte zweite Flansche (116, 346) aufweist, wobei der zweite Gabelkopf eine dritte Anschlagfläche (234, 354) und eine vierte Anschlagfläche (236, 364) einschließt, wobei die Schwenkvorrichtungen ein Paar Schwenkstifte (128) umfassen, wobei jedes Paar der zweiten Flansche (116) mit dem entsprechenden der ersten Flansche (110) schwenkbar derart verbunden ist, dass der zweite Arm (48) und ein zweiter Gabelkopf (98, 342) um die Hauptschwenkachse (54) relativ zum ersten Arm (46) und den ersten Gabelkopf (96, 336) schwenkbar sind, wobei die Schwenkstifte (128) räumlich getrennt sind, um einen Spalt (130) zwischen ihnen zu definieren; **dadurch**, **dass** der Apparat weiterhin eine Stange (148), die sich innerhalb des inneren Bereichs (142) des zweiten Arms erstreckt, und ein Verbindungsstück (145) einschließt, das mit der Stange (148) verbunden und schwenkbar mit dem ersten Gabelkopf (96) verbunden ist, um eine Schwenkbewegung um eine Schwenkachse (162) des Verbindungsstücks zu ermöglichen, die räumlich von der Hauptschwenkachse (54) getrennt ist; **dadurch**, **dass** sich die Feder (150) innerhalb des inneren Bereichs (142) des zweiten Arms erstreckt und eine Kraft auf die Stange (148) und das Verbindungsstück (146) ausübt, um die chirurgische Leuchte (34, 38) auszubalancieren; und **dadurch**, **dass** der zweite Arm (48) und der zweite Gabelkopf (98, 342) schwenkbar um die Hauptschwenkachse (54) relativ zum ersten Arm (46) und dem ersten Gabelkopf (96, 336) zwischen einer ersten Stellung sind, in der die dritte Anschlagfläche (234, 354) in die erste Anschlagfläche (230, 352) greift, um die Schwenkbewegung des zweiten Gabelkopfes (98, 342) und des zweiten Arms (48) in eine erste Richtung zu beschränken, und einer zweiten Stellung, in der die vierte Anschlagfläche (236, 364) in die zweite Anschlagfläche (232, 262) greift, um die Schwenkbewegung des zweiten Gabelkopfes (98, 342) und des zweiten Arms (48) in eine zweite Richtung zu beschränken, wobei sich das Verbindungsstück (146) zwischen dem Paar Schwenkstifte (128) während der Bewegung des zweiten Arms (48) und dem zweiten Gabelkopf (98, 342) zwischen der ersten Stellung und der zweiten Stellung in den Spalt (130) bewegt.

2. Armbaugruppe nach Anspruch 1, worin der erste Gabelkopf (96) einen ersten Hauptkörper (100) einschließt, an den die ersten Flansche (110) angefügt sind, der zweite Gabelkopf (98) einen zweiten Hauptkörper (114) einschließt, an den die zweiten Flansche (116) angefügt sind, der erste Hauptkörper (100) die erste und zweite Anschlagfläche (230, 232) liefert und der zweite Hauptkörper (114) die dritte und vierte Anschlagfläche (234, 236) liefert.

3. Armbaugruppe nach Anspruch 2, worin die erste, zweite, dritte und vierte Anschlagfläche (230, 232, 234, 236) so konfiguriert sind, dass der zweite Gabelkopf (98) und der zweite Arm (48) um einen Winkel von wenigstens einhundertachtzig Grad um die Hauptschwenkachse (54) relativ zum ersten Arm (46) und dem ersten Gabelkopf (95) während der Bewegung des zweiten Arms (48) und des zweiten Gabelkopfs (98) zwischen der ersten und der zweiten Stellung schwenken.

4. Armbaugruppe nach Anspruch 3, worin das Verbindungsstück (146) sich außerhalb des Spaltes (130) zwischen dem Paar Schwenkstifte (128) befindet, wenn sich der zweite Arm (48) und der zweite Gabelkopf (98) in der ersten Stellung befinden, das Verbindungsstück (146) sich außerhalb des Spaltes (130) zwischen dem Paar Schwenkstifte (128) befindet, wenn sich der zweite Arm (48) und der zweite Gabelkopf (98) in der zweiten Stellung befinden, und das Verbindungsstück (146) sich in dem Spalt (130) befindet, wenn der zweite Arm (48) und der zweite Gabelkopf (98) sich auf der Hälfte zwischen der ersten und der zweiten Stellung befinden.

5. Armbaugruppe nach Anspruch 1, worin der erste Gabelkopf (336) einen ersten Hauptkörper (338) einschließt, an den die ersten Flansche (340) angefügt sind, der zweite Gabelkopf (342) einen zweiten Hauptkörper (344) einschließt, an den die zweiten Flansche (346) angefügt sind, der erste Hauptkörper (338) die erste Anschlagfläche (352) und der zweite Hauptkörper (344) die dritte Anschlagfläche (354) liefert, einer der ersten Flansche (340) so geformt ist, dass er die zweite Anschlagfläche (362) einschließt, und einer der zweiten Flansche (346) so geformt ist, dass er die vierte Anschlagfläche (364) einschließt.

6. Armbaugruppe nach Anspruch 5, worin die erste und dritte Anschlagfläche (352, 354) so konfiguriert sind, dass der zweite Arm (48) und der erste Arm (46) zwischen sich einen spitzen Winkel definieren, wenn sich der zweite Arm (48) und der zweite Gabelkopf (342) in der ersten Stellung befinden, und die zweite und vierte Anschlagfläche (362, 364) so konfiguriert sind, dass der zweite Arm (48) und der erste Arm (46) einen Winkel von ca. einhundertachtzig Grad zwischen sich definieren, wenn sich der zweite Arm (48) und der zweite Gabelkopf (342) in der zweiten Stellung befinden.

7. Armbaugruppe nach Anspruch 6, worin sich das Verbindungsstück (146) außerhalb des Spaltes (130) zwischen dem Paar Schwenkstifte (128) befindet, wenn sich der zweite Arm (48) und der zweite Gabelkopf (342) in der ersten Stellung befinden, und sich das Verbindungsstück (146) in dem Spalt (130) zwischen dem Paar Schwenkstifte (128) befindet, wenn sich der zweite Arm (48) und der zweite Gabelkopf (342) in der zweiten Stellung befinden.

8. Armbaugruppe nach einem der vorhergehenden Ansprüche, worin die Schwenkachse (162) des Verbindungsstücks senkrecht oberhalb der Hauptschwenkachse (54) liegt.

9. Armbaugruppe nach einem der vorhergehenden Ansprüche, worin der erste Arm (46), der zweite Arm (48), das Verbindungsstück (146) und die Stange (148) senkrecht zueinander ausgerichtet sind, wenn sich der zweite Arm (48) und der zweite Gabelkopf (98, 342) in der zweiten Stellung befinden.

10. Armbaugruppe nach einem der vorhergehenden Ansprüche, worin die Stange (148) räumlich getrennte erste und zweite Endflächen (168, 184) aufweist und das Verbindungsstück (146) schwenkbar neben der ersten Endfläche (168) an der Stange angebracht ist und worin der Apparat weiterhin eine Einstellvorrichtung (152) einschließt, die über ein Gewinde mit der Stange (148) verbunden ist, die Einstellvorrichtung einen die Stange belegenden Teil (190) und einen die Feder belegenden Teil (188) einschließt, der die Stange belegende Teil eine erste Endfläche (196) aufweist, die dem zweiten Gabelkopf (98) zugewandt ist, der die Feder belegende Teil (188) eine zweite Endfläche (192) aufweist, die von dem zweiten Gabelkopf (98) abgewandt ist, die Feder (150) zwischen dem die Feder belegenden Teil (188) und dem zweiten Gabelkopf (98) zusammen gedrückt wird, sodass sie eine Kraft auf die Stange (148) und das Verbindungsstück (146) ausübt, um die chirurgische Leuchte (34, 38) auszubalancieren, die Einstellvorrichtung (152) beweglich relativ zur Stange (146) zwischen der ersten und zweiten Stellung ist, um den Druck der Feder (150) einzustellen, und die zweite Endfläche (184) der Stange so positioniert ist, dass sie zwischen der ersten und zweiten Endfläche (194, 196) liegt, wenn die Einstellvorrichtung (152) sich in irgendeiner Stellung zwischen der ersten und der zweiten Stellung befindet.

11. Armbaugruppe nach Anspruch 10, worin der die Stange belegende Teil (190) der Einstellvorrichtung einigermaßen zylindrisch ist und sich der die Feder belegende Teil (188) radial nach außen von dem die Stange belegenden Teil (190) erstreckt.

12. Armbaugruppe nach Anspruch 10 oder Anspruch 11, worin es sich bei der Feder um eine Spiralfeder (150) handelt, die einen inneren Bereich (200) aufweist, die Stange (148) sich zwischen dem inneren Bereich (200) der Spiralfeder erstreckt und der die Stange belegende Teil (190) der Einstellvorrichtung so positioniert ist, dass er innerhalb des inneren Bereichs (200) der Spiralfeder liegt.

13. Armbaugruppe nach irgendeinem der Ansprüche 10 bis 12, worin der die Stange belegende Teil (190) der Einstellvorrichtung eine erste zylindrische Außenfläche mit einem ersten Durchmesser aufweist, und der die Feder belegende Teil (188) der Einstellvorrichtung eine zweite zylindrische Außenfläche mit einem zweiten Durchmesser aufweist, der größer ist als der erste Durchmesser.

14. Armbaugruppe nach Anspruch 13, worin die zweite Außenfläche so geformt ist, dass sie eine Vielzahl von sich radial erstreckenden Löchern (212) aufweist, und der zweite Arm (48) so geformt ist, dass er ein Fenster (214) einschließt, durch welches die Löcher (212) mit einem Einstellwerkzeug zugänglich sind, um die Stellung der Einstellvorrichtung (152) relativ zur Stange (148) zwischen der ersten und zweiten Stellung einzustellen.

15. Armbaugruppe nach irgendeinem der vorhergehenden Ansprüche, worin das Paar erste Flansche (110, 340) einen ersten Raum (112) zwischen sich definiert, das Paar zweite Flansche (116, 846) einen zweiten Raum (118) zwischen sich definiert, wenigstens ein Teil des Paares erster Flansche (110, 340) so positioniert ist, dass er in dem zweiten Raum (118) liegt, sodass jeder erste Flansch (110, 340) neben dem entsprechenden der zweiten Flansche (116, 846) liegt, und worin der Apparat weiterhin einen Raumfüller (244, 380) einschließt, der so positioniert ist, dass er in dem ersten Raum (112) liegt, jeder erste Flansch (110, 340) einen ersten Rand (264), jeder zweite Flansch (116, 346) einen zweiten Rand (266) aufweist, und der Raumfüller (244, 380) einen dritten Rand (254) aufweist, wobei der dritte Rand im Wesentlichen den ersten Raum (112) zwischen den ersten Flanschen überbrückt und der dritte Rand (254) mit dem ersten Rand (264) zusammenwirkt, um im Wesentlichen den zweiten Raum (118) zwischen den zweiten Flanschen zu überbrücken.

16. Armbaugruppe nach Anspruch 15, worin der erste, zweite und dritte Rand (264, 266, 254) im Wesentlichen konzentrisch zu der Hauptschwenkachse sind und im Wesentlichen gleiche Durchmesser aufweisen.

17. Armbaugruppe nach Anspruch 15 oder Anspruch 16, worin der Raumfüller (244) eine Randzone (248) aufweist, die den dritten Rand (254) liefert, der Raumfüller eine dünne Wand (246) einschließt, welche an die Randzone (248) angefügt ist, das Verbindungsstück (146) eine erste senkrechte Fläche einschließt, die der dünnen Wand zugewandt ist, und das Verbindungsstück eine zweite senkrechte Fläche einschließt, welche der dünnen Wand abgewandt ist.

18. Armbaugruppe nach Anspruch 17, worin die dünne Wand (246) so geformt ist, dass sie einen gebogenen Schlitz (252) einschließt, und die Baugruppe weiterhin einen Verbindungsstift (160) enthält, der schwenkbar das Verbindungsstück (146) mit wenigstens einem der ersten Flansche (110) verbindet, und der Verbindungsstift (160) in dem gebogenen Schlitz (252) aufgenommen ist.

19. Armbaugruppe entweder nach Anspruch 17 oder Anspruch 18, worin die dünne Wand (245) so geformt ist, dass sie eine mittlere Öffnung (250) einschließt, und einer des Paars von Schwenkstiften (128) von der mittleren Öffnung (250) aufgenommen wird, sodass der Raumfüller (244) für eine Schwenkbewegung um die Hauptschwenkachse (54) relativ zu den ersten Flanschen (110) gestützt wird.

20. Armbaugruppe nach irgendeinem der Ansprüche 15 bis 19, worin der dritte Rand (254) so geformt ist, dass er einen das Verbindungsstück aufnehmenden Spalt (262) einschließt, und das Verbindungsstück (146) sich durch den das Verbindungsstück aufnehmenden Spalt erstreckt.

## Revendications

1. Ensemble de bras (32, 34, 332) destiné à supporter une tête d'éclairage chirurgical (34, 35) d'un appareil d'éclairage chirurgical, l'ensemble de bras comprenant un premier bras (46), un second bras (48) formé de façon à comprendre une région intérieure (142), la tête d'éclairage chirurgical (34, 38) étant supportée par le second bras et un ressort (150) destiné à exercer une force pour faire contrepoids à la tête d'éclairage chirurgical (34, 38), **caractérisé en ce que** l'appareil comprend en outre des moyens formant pivot (128) destinés à coupler de manière orientable le second bras (48) au premier bras (46) de sorte que le second bras (48) est orientable autour d'un axe de pivotement principal (54) par rapport au premier bras (46), une première chape à rotule (96, 336) reliée au premier bras (46) et présentant une paire de premières joues séparées (110, 340), la première chape à rotule comprenant une première surface supérieure (230, 352) et une deuxième surface supérieure (232, 362), une seconde chape à rotule (98, 342) reliée au second bras (48) et présentant une paire de secondes joues séparées (116, 346), la seconde chape à rotule comprenant une troisième surface supérieure (234, 354) et une quatrième surface supérieure (236, 364), les moyens formant pivot comprenant une paire de pivots (128) couplant de manière orientable chacune des joues de la paire de secondes joues (116) à l'une respective des premières joues (110) de sorte que le second bras (48) et une seconde chape à rotule (98, 342) sont orientables autour de l'axe de pivotement principal (54) par rapport au premier bras (46) et à la première chape à rotule (96, 336), les pivots (128) étant disposés à distance l'un de l'autre afin de définir un espacement (130) entre eux ; **en ce que** l'appareil comprend en outre une tige (148) s'étendant à l'intérieur de la région intérieure (142) du second bras et un élément de liaison (146) couplé à la tige (148) et couplé de manière orientable à la première chape à rotule (96) pour effectuer un mouvement de pivotement autour d'un axe de pivotement (162) de l'élément de liaison qui est disposé à distance de l'axe de pivotement principal (54), **en ce que** le ressort (150) s'étend dans la région intérieure (142) du second bras et exerce une force sur la tige (148) et l'élément de liaison (146) pour faire contrepoids à la tête d'éclairage chirurgical (34, 38), et **en ce que** le second bras (48) et la seconde chape à rotule (98, 342) sont orientables autour de l'axe de pivotement principal (54) par rapport au premier bras (46) et à la première chape à rotule (96, 336) entre une première position dans laquelle la troisième surface supérieure (234, 354) met en prise la première surface supérieure (230, 352) pour limiter le mouvement de pivotement de la seconde chape à rotule (98, 342) et du second bras (48) dans une première direction, et une seconde position dans laquelle la quatrième surface supérieure (236, 364) met en prise la deuxième surface supérieure (232, 262) pour limiter le mouvement de pivotement de la seconde chape à rotule (98, 342) et du second bras (48) dans une seconde direction, l'élément de liaison (146) se déplaçant dans l'espacement (130) entre la paire de pivots (128) pendant le mouvement du second bras (48) et de la seconde chape à rotule (98, 342) entre la première position et la seconde position.

2. Ensemble de bras selon la revendication 1, dans lequel la première chape à rotule (96) comprend un premier corps principal (100) auquel sont fixées les premières joues (110), la seconde chape à rotule (98) comprend un second corps principal (114) auquel sont fixées les secondes joues (116), le premier corps principal (100) présente les première et deuxième surfaces supérieures (230, 232) et le second corps principal (114) présente les troisième et quatrième surfaces supérieures (234, 236).

3. Ensemble de bras selon la revendication 2, dans lequel les première, deuxième, troisième et quatrième surfaces supérieures (230, 232, 234, 236) sont configurées de sorte que la seconde chape à rotule (98) et le second bras (48) pivotent selon un angle d'au moins 180° autour de l'axe de pivotement principal (54) par rapport au premier bras (46) et à la première chape à rotule (96) pendant le mouvement du second bras (48) et de la seconde chape à rotule (98) entre les première et seconde positions.

4. Ensemble de bras selon la revendication 3, dans lequel l'élément de liaison (146) est à l'extérieur de l'espacement (130) entre la paire de pivots (128) lorsque le second bras (48) et la seconde chape à rotule (98) se trouvent dans la première position, l'élément de liaison (146) est à l'extérieur de l'espacement (130) entre la paire de pivots (128) lorsque le second bras (48) et la seconde chape à rotule (98) se trouvent dans la seconde position, et l'élément de liaison (146) est positionné de façon à se trouver dans l'espacement (130) lorsque le second bras (48) et la seconde chape à rotule (98) sont à mi-chemin entre les première et seconde positions.

5. Ensemble de bras selon la revendication 1, dans lequel la première chape à rotule (336) comprend un premier corps principal (338) auquel sont fixées les premières joues (340), la seconde chape à rotule (342) comprend un second corps principal (344) auquel sont fixées les secondes joues (346), le premier corps principal (338) présente la première surface supérieure (352), le second corps principal (344) présente la troisième surface supérieure (354), l'une des premières joues (340) est formée de façon à comprendre la deuxième surface supérieure (362), et l'une des secondes joues (346) est formée de façon à comprendre la quatrième surface supérieure (364).

6. Ensemble de bras selon la revendication 5, dans lequel les première et troisième surfaces supérieures (352, 354) sont configurées de sorte que le second bras (48) et le premier bras (46) définissent un angle aigu inclus entre ceux-ci lorsque le second bras (48) et la seconde chape à rotule (342) se trouvent dans la première position et les deuxième et quatrième surfaces supérieures (362, 364) sont configurées de sorte que le second bras (48) et le premier bras (46) définissent un angle d'environ 180° entre eux lorsque le second bras (48) et la seconde chape à rotule (342) se trouvent dans la seconde position.

7. Ensemble de bras selon la revendication 6, dans lequel l'élément de liaison (146) est à l'extérieur de l'espacement (130) entre la paire de pivots (128) lorsque le second bras (48) et la seconde chape à rotule (342) se trouvent dans la première position et l'élément de liaison (146) est positionné de façon à se trouver dans l'espacement (130) entre la paire de pivots (128) lorsque le second bras (48) et la seconde chape à rotule (342) se trouvent dans la seconde position.

8. Ensemble de bras selon l'une quelconque des revendications précédentes, dans lequel l'axe de pivotement (162) de l'élément de liaison se situe verticalement au-dessus de l'axe de pivotement principal (54).

9. Ensemble de bras selon l'une quelconque des revendications précédentes, dans lequel le premier bras (46), le second bras (48), l'élément de liaison (146) et la tige (148) sont alignés verticalement les uns avec les autres lorsque le second bras (48) et la seconde chape à rotule (98, 342) se trouvent dans la seconde position.

10. Ensemble de bras selon l'une quelconque des revendications précédentes, dans lequel la tige (148) possède une première et une seconde surface d'extrémité (168, 184) situées à distance l'une de l'autre et l'élément de liaison (146) est couplé de manière orientable à la tige de manière adjacente à la première surface d'extrémité (168), et dans lequel l'appareil comprend en outre un organe de réglage (152) couplé par vissage à la tige (148), l'organe de réglage comprenant une partie mettant en prise la tige (190) et une partie mettant en prise le ressort (188), la partie mettant en prise la tige présentant une première face d'extrémité (196) tournée vers la seconde chape à rotule (98), la partie mettant en prise le ressort (188) présentant une seconde face d'extrémité (192) tournée à l'opposé de la seconde chape à rotule (98), le ressort (150) étant comprimé entre la partie mettant en prise le ressort (188) et la seconde chape à rotule (98) de façon à exercer une force sur la tige (148) et l'élément de liaison (146) pour faire contrepoids à la tête d'éclairage chirurgical (34, 38), l'organe de réglage (152) étant déplaçable par rapport à la tige (146) entre les première et seconde positions pour régler la compression du ressort (150), et la seconde surface d'extrémité (184) de la tige étant positionnée de façon à se trouver entre les première et seconde faces d'extrémité (194, 196) lorsque l'organe de réglage (152) se trouve dans une quelconque position entre les première et seconde positions.

11. Ensemble de bras selon la revendication 10, dans lequel la partie mettant en prise la tige (190) de l'organe de réglage est légèrement cylindrique et la partie mettant en prise le ressort (188) s'étend radialement vers l'extérieur de la partie mettant en prise la tige (190).

12. Ensemble de bras selon l'une ou l'autre des revendications 10 ou 11, dans lequel le ressort est un ressort à enroulement (150) présentant une région intérieure (200), la tige (148) s'étend dans la région intérieure (200) du ressort à enroulement, et la partie mettant en prise la tige (190) de l'organe de réglage est positionnée de façon à se trouver dans la région intérieure (200) du ressort à enroulement.

13. Ensemble de bras selon l'une quelconque des revendications 10 à 12, dans lequel la partie mettant en prise la tige (190) de l'organe de réglage comprend une première surface externe cylindrique présentant un premier diamètre et la partie mettant en prise le ressort (188) de l'organe de réglage comprend une seconde surface externe cylindrique présentant un second diamètre qui est supérieur au premier diamètre.

14. Ensemble de bras selon la revendication 13, dans lequel la seconde surface externe est formée de façon à comprendre une pluralité de trous (212) s'étendant radialement et le second bras (48) est formé de façon à comprendre une fenêtre (214) à travers laquelle les trous (212) sont accessibles avec un outil de réglage pour régler la position de l'organe de réglage (152) par rapport à la tige (148) entre les première et seconde positions.

15. Ensemble de bras selon l'une quelconque des revendications précédentes, dans lequel la paire de premières joues (110, 340) définit un premier espace (112) entre elles, la paire de seconde joues (116, 846) définit un second espace (118) entre elles, au moins une partie de la paire de premières joues (110, 340) étant positionnée de façon à se trouver dans le second espace (118) de telle sorte que chaque première joue (110, 340) est adjacente à l'une respective des secondes joues (116, 346), et dans lequel l'appareil comprend en outre un élément de remplissage (244, 380) positionné de façon à se trouver dans le premier espace (112), chaque première joue (110, 340) présentant un premier bord (264), chaque seconde joue (116, 346) présentant un deuxième bord (266), et l'élément de remplissage (244, 380) présentant un troisième bord (254), le troisième bord traversant sensiblement le premier espace (112) entre les premières joues, et le troisième bord (254) agissant conjointement avec le premier bord (264) pour traverser sensiblement le second espace (118) entre les secondes joues.

16. Ensemble de bras selon la revendication 15, dans lequel les premier, deuxième et troisième bords (264, 266, 254) sont sensiblement concentriques avec l'axe de pivotement principal et présentent des diamètres sensiblement équivalents.

17. Ensemble de bras selon l'une ou l'autre des revendications 15 ou 16, dans lequel l'élément de remplissage (244) comprend un rebord (248) formant le troisième bord (254), l'élément de remplissage comprend une paroi fine (246) reliée au rebord (248), l'élément de liaison (146) comprend une première surface verticale tournée vers la paroi fine, et l'élément de liaison comprend une seconde surface verticale tournée à l'opposé de la paroi fine.

18. Ensemble de bras selon la revendication 17, dans lequel la paroi fine (246) est formée de façon à comprendre une fente arquée (252) et l'ensemble comprend en outre un axe d'articulation (160) couplant de manière orientable l'élément de liaison (146) à au moins une des premières joues (110) l'axe d'articulation (160) étant logé dans la fente arquée (252).

19. Ensemble de bras selon l'une ou l'autre des revendications 17 ou 18, dans lequel la paroi fine (246) est formée de façon à comprendre une ouverture centrale (250) et l'un des pivots de la paire de pivots (128) est reçu par l'ouverture centrale (250) de sorte que l'élément de remplissage (244) est supporté pour le mouvement de pivotement autour de l'axe de pivotement principal (54) par rapport aux premières joues (110).

20. Ensemble de bras selon l'une quelconque des revendications 15 à 19, dans lequel le troisième bord (254) est formé de façon à comprendre un espacement de réception (262) de l'élément de liaison et l'élément de liaison (146) s'étend à travers l'espacement de réception de l'élément de liaison.
